Europäisches Patentamt

European Patent Office

Office européen des brevets

(19)

(11) Veröffentlichungsnummer : **0 208 151**
**B1**

(12)　　　　　EUROPÄISCHE PATENTSCHRIFT

(45) Veröffentlichungstag der Patentschrift :
28.09.88

(21) Anmeldenummer : 86107774.1

(22) Anmeldetag : 06.06.86

(51) Int. Cl.⁴ : **B 60 T　7/20**, B 60 T　7/10,
B 60 T 13/08

(54) Fahrgestell für auflaufgebremste Fahrzeuganhänger.

(30) Priorität : 29.06.85 DE 3523335

(43) Veröffentlichungstag der Anmeldung :
14.01.87 Patentblatt 87/03

(45) Bekanntmachung des Hinweises auf die Patenterteilung : 28.09.88 Patentblatt 88/39

(84) Benannte Vertragsstaaten :
AT DE FR IT NL SE

(56) Entgegenhaltungen :
DE-A- 2 151 591
DE-C- 735 542
DE-C- 3 404 929
FR-A- 2 167 007
US-A- 2 221 929
US-A- 2 973 062

(73) Patentinhaber : Eisenwerk Grümer GmbH & Co. KG
Wilhelm-Grümer-Weg 1
D-5276 Wiehl 1 (DE)

(72) Erfinder : Dowe, Günter
Langwiese
D-5223 Nümbrecht (DE)
Erfinder : Homann, Hans-Wolfgang, Dr.-Ing.
Dahlienstrasse 9
D-5276 Wiehl (DE)
Erfinder : Johanns, Karl-Heinz
Dorfanger
D-5223 Nümbrecht (DE)
Erfinder : Nöllig, Udo

D-5226 Reichshof/Menkausen (DE)

(74) Vertreter : Patentanwälte Dipl.-Ing. Alex Stenger
Dipl.-Ing. Wolfram Watzke Dipl.-Ing. Heinz J. Ring
Kaiser-Friedrich-Ring 70
D-4000 Düsseldorf 11 (DE)

Jouve, 18, rue St-Denis, 75001 Paris, France

EP 0 208 151 B1

## Beschreibung

Gegenstand der Erfindung ist ein Fahrgestell für auflaufgebremste Fahrzeuganhänger mit wenigstens einem Achskörper und Radbremsen, wobei die Bremskraft über eine mechanische Kraftübertragungseinrichtung von der Auflaufeinrichtung auf wenigstens einen drehfest mit einer Bremswelle verbundenen Bremshebel und von diesem auf Bremsbacken einer Trommel- oder Scheibenbremse übertragen wird. Dabei ist der Achskörper derart in seiner Aufhängung angeordnet, daß er während einer Bremsung bei Vorwärtsfahrt durch einen Anschlag an einer Drehung gehindert ist, wogegen er während einer Bremsung bei Rückwärtsfahrt entgegen einer Rückstellkraft aus seiner Ruhelage heraus begrenzt drehbar um seine eigene Achse gelagert ist. Außerdem sind ein mit dem Achskörper drehfest verbundener Achshebel vorgesehen und die Bremswelle ist an einem mit dem Achskörper drehfest verbundenen Teil drehbar gelagert.

Bei auflaufgebremsten Fahrzeuganhängern ist es wünschenswert, daß bei Rückwärtsfahrt ohne das Einlegen einer besonderen Rückfahrsperre ein Bremsmoment nicht erzeugt wird. Dafür sind verschiedene, als Rückfahrautomatik bezeichnete technische Lösungen bekannt geworden, die aber alle eine spezielle Bremsenkonstruktion erfordern.

Ein Fahrgestell der eingangs beschriebenen Gattung ohne Rückfahrautomatik ist aus der US-A-2 221 929 bekannt. Wenn dieses Fahrgestell mit einer Rückfahrautomatik ausgerüstet werden soll, ist dafür eine spezielle Bremsenkonstruktion erforderlich.

Weiterhin ist aus der DE-A-2 151 591 ein auflaufgebremstes Fahrgestell für Fahrzeuganhänger mit einer Rückfahrautomatik bekannt, bei welcher der Bremsgliedträger, an dem die Bremsbacken abgestützt sind, begrenzt schwenkbar auf dem Achskörper gelagert ist und sich bei einer Bremsung in Vorwärtsfahrt gegen einen festen Anschlag abstützt, während er bei einer Bremsung in Rückwärtsfahrt ausweichen kann, so daß sich ein Bremsmoment nicht aufbaut. Auch bei dieser bekannten Rückfahrautomatik ist eine spezielle Bremskonstruktion erforderlich, die bei vorhandenen Fahrgestellen nicht nachgerüstet werden kann.

Davon ausgehend liegt der Erfindung die Aufgabe zugrunde, ein einfach konstruiertes Fahrgestell für auflaufgebremste Fahrzeuganhänger mit einer Rückfahrautomatik zu schaffen, die zwischen einer mechanischen Auflaufeinrichtung herkömmlicher Konstruktion und serienmäßig hergestellten Achsen mit mechanisch betätigten Trommel- oder Scheibenbremsen herkömmlicher Konstruktion eingebaut werden kann und auch eine Nachrüstung ermöglicht.

Als technische Lösung wird dafür ein gattungsgemäßes Fahrgestell vorgeschlagen, bei dem die Bremswelle im freien Ende des Achshebels gelagert ist und die mechanische Kraftübertragungseinrichtung als Schlauchkabel ausgebildet ist, dessen Kabel an einem fahrgestellfesten Konstruktionsteil angreift, während der Schlauch am Bremshebel abgestützt ist.

Bei einer praktischen Ausführungsform kann die Aufhängung aus Rohrabschnitten mit größerem Querschnitt als der Achskörper und zwischen diesen beiden Konstruktionsteilen eingesetzten Gummifederelementen bestehen. Die Rohrabschnitte werden zweckmäßig mit den Unterteilen von Federspanngehäusen verbunden. In dieser Ausführungsform erzeugen die Gummifederelemente ein Rückstellmoment, welches den Achskörper nach einer Rückwärtsfahrt in seine Bremslage für die Vorwärtsfahrt zurückdreht.

In einer anderen Ausführungsform kann die Aufhängung auch aus Gleitlagern bestehen, die aus den Achskörper umgebenden Segmenten und einem zweiteiligen Lagergehäuse gebildet sind, welches mit den Unterteilen der Federspanngehäuse verbunden werden kann. Zur Begrenzung des maximalen Drehwinkels des Achskörpers werden zweckmäßig Anschlagstifte vorgesehen, welche in Schlitze des Lagergehäuses eingreifen. Das Rückstellmoment für den Achskörper nach einer Rückwärtsfahrt in seine Bremslage für die Vorwärtsfahrt kann durch Rückholfedern erzeugt werden, welche zwischen den Achshebeln und dem Lagergehäuse angeordnet sind.

Schließlich kann die Aufhängung in einer weiteren Ausführungsform auch aus unter dem Achskörper befestigten Stützhebeln, einer diese miteinander verbindenden Stützachse und einem Käfig bestehen, in dem die Stützachse gelagert ist. Dabei können die Käfige mit den Unterteilen der Federspanngehäuse verbunden werden. Das Rückstellmoment zum Verdrehen des Achskörpers nach einer Rückwärtsfahrt in seine Bremslage für die Vorwärtsfahrt kann dadurch erzeugt werden, daß die Mitte der Stützachse gegenüber der Mitte des Achskörpers in Fahrtrichtung nach vorne versetzt angeordnet ist.

Bei einer Abwandlung der zuletzt beschriebenen Ausführungsform kann das Verbindungselement zwischen den Stützhebeln und Käfigen auch aus einer Drehstabfeder bestehen, die gleichzeitig das Rückstellmoment für den Achskörper erzeugt.

Nach dieser technischen Lehre ausgebildete Fahrgestelle für auflaufgebremste Fahrzeuganhänger benötigen auch eine Feststellbremse (Handbremse), die bei einem einachsigen Fahrgestell in der Regel mit einer starren Deichsel und bei einem mehrachsigen Fahrgestell in der Regel mit einer schwenkbaren Deichsel zusammenarbeitet.

Für ein einachsiges Fahrgestell mit einer starren Deichsel und einer Feststellbremse, deren Bremsmoment mit einem Schlauchkabel übertragen wird, schlägt die Erfindung vor, das Kabel der Feststellbremse an einem mit dem Achskörper verbundenen Zughebel angreifen zu lassen, während der Schlauch am Bremshebel abgestützt ist.

Für ein mehrachsiges Fahrgestell mit einer schwenkbaren Deichsel und einer Fallbremse, deren Bremsmoment mit einem Schlauchkabel übertragen wird, schlägt die Erfindung vor, daß zwischen einem Handbremshebel und dem Schlauchkabel ein teleskopierbares Rohr angeordnet ist, dessen Innenrohr am Achshebel abgestützt und mit dem Kabel verbunden ist, während das Außenrohr mit dem Handbremshebel verbunden und am Schlauch abgestützt ist.

Das nach dieser technischen Lehre ausgebildete Fahrgestell verfügt in allen Ausführungsformen über eine Rückfahrautomatik, die lediglich aus einer begrenzt drehbaren Aufhängung eines Achskörpers und einer dazu passenden Anordnung des Schlauchkabels zur Übertragung der Bremskraft besteht, wobei das Schlauchkabel auch durch ein Teleskoprohr ersetzt werden könnte. Am Anfang einer Rückwärtsfahrt wird von der Auflaufeinrichtung ein Bremsmoment auf die Radbremsen übertragen, so daß die Haftreibung der Räder den Achskörper aus seiner Bremslage bei Vorwärtsfahrt in eine nichtbremsende Lage bei Rückwärtsfahrt verschwenkt, weil gleichzeitig über die Achshebel auch der Abstützpunkt des Schlauchkabels oder des Teleskoprohres an den Bremshebeln soweit verschwenkt wird, daß der Auflageweg erschöpft ist und ein Bremsmoment nicht mehr übertragen werden kann. Ein besonderer technischer Vorteil der nach dieser technischen Lehre ausgebildeten Rückfahrautomatik besteht darin, daß sie auch an vorhandenen Fahrgestellen noch nachgerüstet werden kann, weil sie mit Auflaufeinrichtungen und Radbremsen herkömmlicher Konstruktion zusammenarbeitet.

Weitere Einzelheiten und Vorteile ergeben sich aus der nachfolgenden Beschreibung der zugehörigen Zeichnungen, in denen verschiedene Ausführungsformen eines erfindungsgemäß ausgebildeten Fahrgestelles schematisch in Ansichten und Schnitten dargestellt worden sind. In den Zeichnungen zeigen :

Fig. 1 ein einachsiges Fahrgestell in Vorwärtsfahrt mit einem in Gummifederelementen gelagerten Achskörper in Seitenansicht ;

Fig. 2 dasselbe Fahrgestell gem. Fig. 1 in Draufsicht ;

Fig. 3 dasselbe Fahrgestell gem. Fig. 1 entlang der Linie III-III geschnitten ;

Fig. 4 eine Seite desselben Fahrgestelles gem. Fig. 1 in Richtung des Pfeiles IV (Fig. 2) gesehen von vorn in Ansicht ;

Fig. 5 ein einachsiges Fahrgestell in Rückwärtsfahrt mit in Gummifederelementen gelagertem Achskörper in Seitenansicht ;

Fig. 6 dasselbe Fahrgestell gem. Fig. 5 in Draufsicht ;

Fig. 7 dasselbe Fahrgestell gem. Fig. 5 entlang der Linie VII-VII (Fig. 6) geschnitten in Seitenansicht ;

Fig. 8 eine Hälfte desselben Fahrgestelles gem. Fig. 5 in Richtung des Pfeiles VIII (Fig. 6) gesehen von vorn in Ansicht ;

Fig. 9 einen vergrößerten Ausschnitt aus Fig. 1 in Vorwärtsfahrt entlang der Linie IX-IX in Fig. 2 geschnitten ;

Fig. 10 denselben Ausschnitt wie in Fig. 9 bei Rückwärtsfahrt entlang der Linie X-X in Fig. 6 geschnitten ;

Fig. 11 einen Ausschnitt eines Fahrgestelles mit einem in Gleitlagern angeordneten Achskörper bei Vorwärtsfahrt im Querschnitt ;

Fig. 12 denselben Ausschnitt gem. Fig. 11 in Ansicht von vorn ;

Fig. 13 denselben Ausschnitt gem. Fig. 11 bei Rückwärtsfahrt im Querschnitt ;

Fig. 14 denselben Ausschnitt gem. Fig. 13 in Ansicht von vorn ;

Fig. 15 einen Ausschnitt eines Fahrgestelles mit einem auf einer Schwenkwelle gelagerten Achskörper bei Vorwärtsfahrt im Querschnitt ;

Fig. 16 denselben Ausschnitt gem. Fig. 15 in Ansicht von vorn ;

Fig. 17 denselben Ausschnitt gem. Fig. 15 bei Rückwärtsfahrt im Querschnitt ;

Fig. 18 denselben Ausschnitt gem. Fig. 17 in Ansicht von vorn ;

Fig. 19 ein einachsiges Fahrgestell mit einer starren Deichsel und Feststellbremse in Seitenansicht ;

Fig. 20 dasselbe Fahrgestell gem. Fig. 19 in Draufsicht ;

Fig. 21 einen vergrößerten Ausschnitt desselben Fahrgestelles gem. Fig. 19 entlang der Linie XXI-XXI in Fig. 20 geschnitten in Seitenansicht ;

Fig. 22 ein einachsiges Fahrgestell mit schwenkbarer Deichsel und Feststellbremse in Seitenansicht ;

Fig. 23 dasselbe Fahrgestell gem. Fig. 22 in Draufsicht ;

Fig. 24 einen vergrößerten Ausschnitt XXIV aus Fig. 22 im Querschnitt.

Bei den dargestellten, auflaufgebremsten Fahrzeuganhängern arbeitet eine mechanische Auflaufeinrichtung 1 bestehend aus einem Führungsrohr 2 für eine Zugstange 3, einer Druckstange 4 und einem Übertragungshebel 5, über ein Schlauchkabel 6, bestehend aus einem Schlauch 7 und einem Kabel 8, mit einer Radbremse 9 zusammen. Dabei wird die beim Auflaufen erzeugte Bremskraft über Bremshebel 10 und Bremswellen 11 auf Bremsnocken 12 übertragen, welche Bremsbacken 13 zur Anlage an einer Bremstrommel 14 bringen. Die Bremswellen 11 sind einerseits in Achshebeln 15 und andererseits in Bremsschilden 16 gelagert. Die Achshebel 15 und Bremsschilde 16 sind an einem Achskörper 17 befestigt, auf dessen Enden die Bremstrommeln 14 drehbar gelagert sind.

Der Schlauch 7 des Schlauchkabels 6 ist auflaufseitig am Führungsrohr 2 und achsseitig an einem der beiden Bremshebel 10 verbindenden Zwischenglied 18 abgestützt, während das Kabel 8 auflaufseitig am Übertragungshebel 5 und achsseitig an einer über dem Achskörper liegenden Traverse 19 in Zugrichtung mit Muttern 20 abgestützt, in Druckrichtung aber freibeweglich geführt ist.

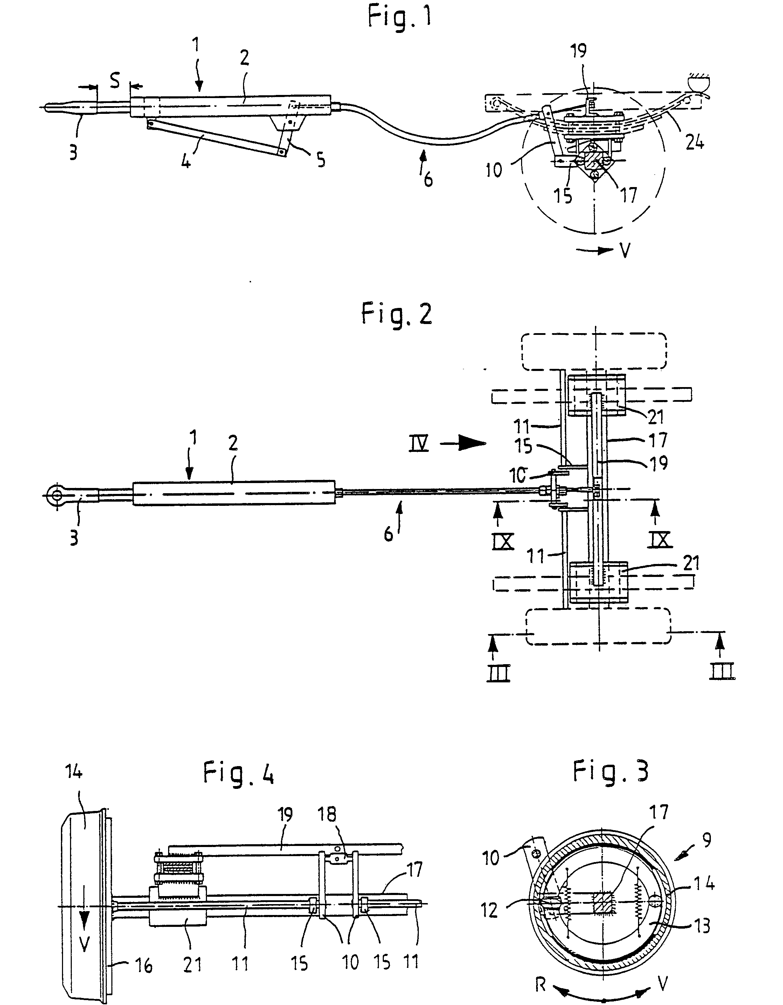

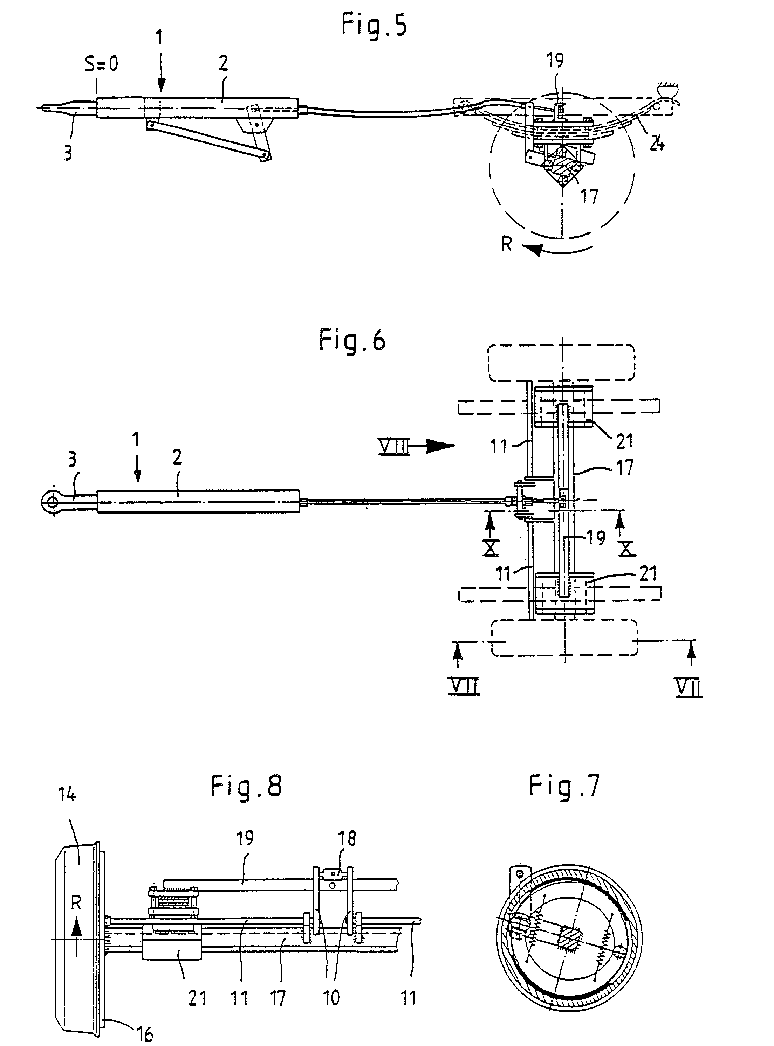

In der Ausführungsform gemäß den Fig. 1 bis 10 besteht die Aufhängung des Achskörpers 17 aus Rohrabschnitten 21 und eingepressten Gummifederelementen 22, die ein Rückstellmoment auf den Achskörper 17 ausüben. Die Rohrabschnitte 21 sind über Federspanngehäuse 23 und Blattfedern 24 ebenso wie die Traverse 19 fahrgestellfest angeordnet. Der maximale Drehwinkel des Achskörpers 17 ist durch doppelte Anschlagkeile 49 begrenzt.

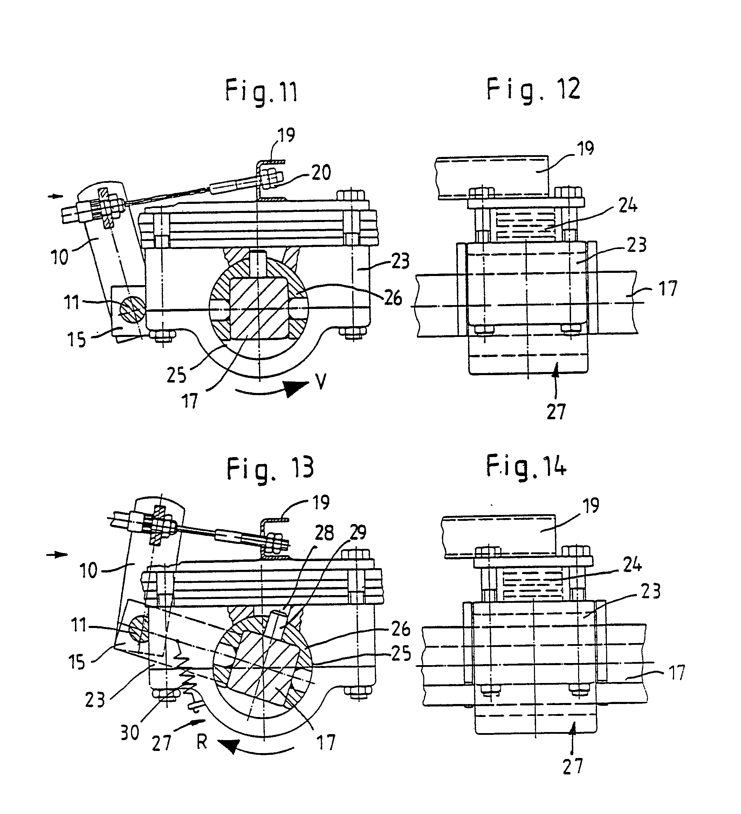

Bei der Ausführungsform gemäß den Fig. 11 bis 14 besteht die Aufhängung des Achskörpers 17 aus einem Gleitlager 25, welches von den Achskörper umgebenden Segmenten 26 und einem Lagergehäuse 27 gebildet wird, welches aus einer unteren Lagerschale und einer im Federspanngehäuse 23 ausgebildeten, oberen Lagerschale besteht. An der oberen Lagerschale des Federspanngehäuses 23 ist ein Schlitz 28 ausgebildet, in den ein achsfester Anschlagstift 29 eingreift, um den maximalen Drehwinkel des Achskörpers 17 zu beschränken. Außerdem ist zwischen der unteren Lagerschale und dem Achshebel 15 eine Rückstellfeder 30 angeordnet.

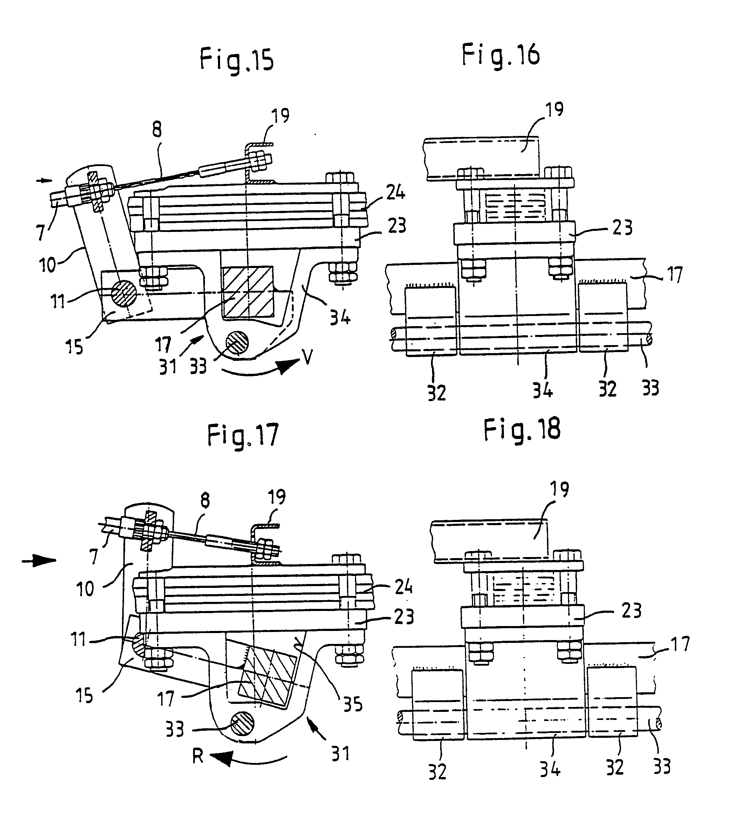

In der Ausführungsform gemäß den Fig. 15 bis 18 besteht die Aufhängung des Achskörpers 17 aus einem Schwenklager 31, welches von Stützhebeln 32, einer diese miteinander verbindenden Stützachse 33 und einem Käfig 34 gebildet wird, in dem die Stützachse 33 gelagert ist. Der Käfig 34 ist mit einer Öffnung 35 versehen, welche die maximale Schwenkbeweglichkeit des Achskörpers 17 begrenzt. Die Stützachse 33 ist gegenüber dem Achskörper 17 etwas versetzt angeordnet, um über die Achslast ein Rückstellmoment zu erzeugen, welches den Achskörper 17 in die in der Fig. 15 dargestellte Lage zurückführt.

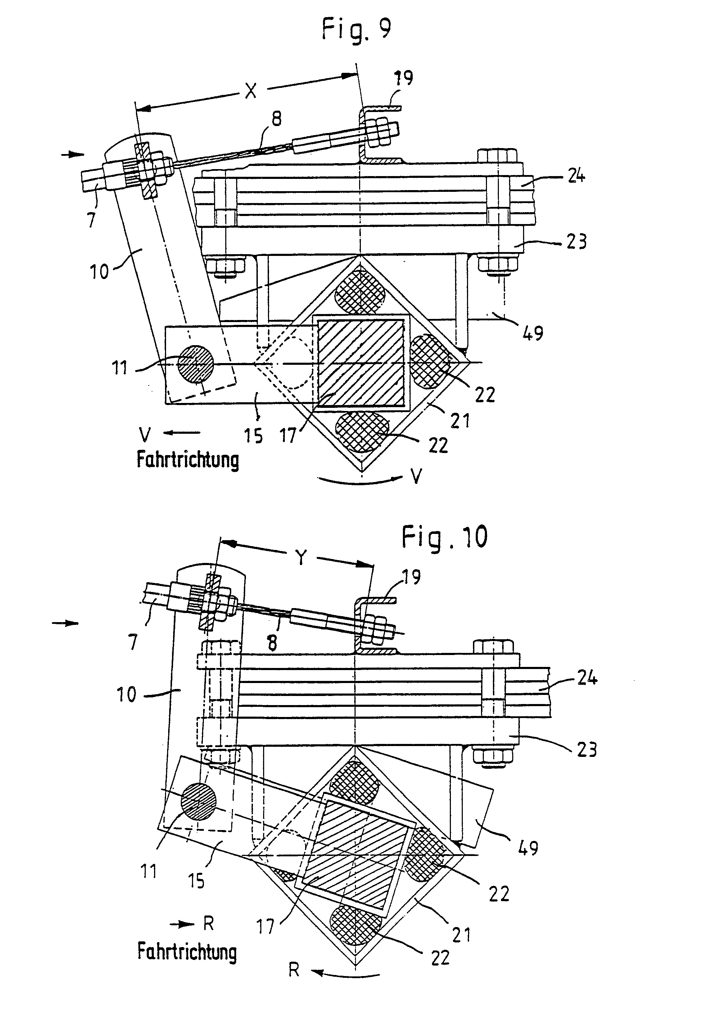

Bei einer Bremsung in Vorwärtsfahrt V wird unter Verringerung eines Auflaufweges S von der Auflaufeinrichtung 1 über das Schlauchkabel 6 eine Bremskraft auf die Bremshebel 10 übertragen und von diesen über die Bremswellen 11 in Zuspannmomente an den Bremsnocken 12 umgewandelt. Dabei wird das Kabel 8 zwischen dem Übertragungshebel 5 und der Traverse 19 gestreckt, so daß der Schlauch 7 die Bremshebel 10 verstellt. Bei Rückwärtsfahrt R geschieht am Anfang genau das gleiche, bis der maximale Auflaufweg S an der Auflaufeinrichtung 1 erschöpft ist. Dies ist möglich, weil der Achskörper 17 gegen die Wirkung der Gummifederelemente 22 (Fig. 9, 10) bzw. der Rückstellfeder 30 (Fig. 11, 13) bzw. das Rückstellmoment (Fig. 15, 17) verschwenkt wird und dabei gleichzeitig der Abstützpunkt des Schlauches 7 ausweicht, weil die Bremshebel 10 mit den am Achskörper 17 befestigten Achshebeln 15 verschwenkt werden. Sobald der maximale Auflaufweg S erschöpft ist, wird bis auf einen zulässigen Rest keine Bremskraft mehr über die Bremshebel 10 und die Bremswellen 11 auf die Bremsnocken 12 übertragen. Das Fahrgestell kann praktisch ohne Bremswirkung rückwärts gefahren werden.

Bei einer Drehrichtungsumkehr in Vorwärtsfahrt V wird der Achskörper 17 unter der Wirkung der Gummifederelemente 22 (Fig. 9, 10) bzw. der Rückstellfeder 30 (Fig. 11, 13) bzw. des Rückstellmoments (Fig. 15, 17) wieder in seine normale Bremslage bei Vorwärtsfahrt zurückgeführt. In allen drei Ausführungsformen erfüllt die beschriebene Aufhängung des Achskörpers 17 in Verbindung mit der beschriebenen Anordnung des Schlauchkabels 6 die an eine Rückfahrautomatik zu stellenden Anforderungen. Dabei werden ein Achskörper 17 und Radbremsen 9 herkömmlicher Konstruktion verwendet.

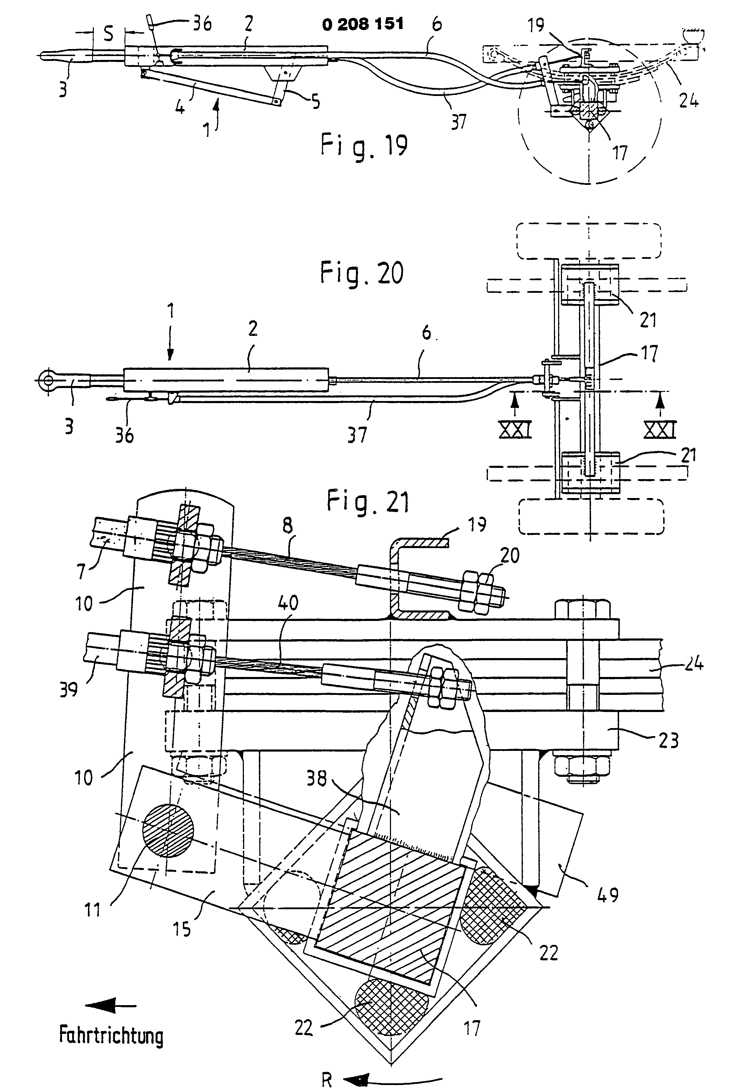

Das vorstehend beschriebene Fahrgestell kann auch auf sehr einfache Weise mit einer Feststellbremse 36 versehen werden. In der Ausführungsform gem. den Figuren 19 bis 21 mit einer feststehenden Deichsel ist die Feststellbremse 36 über ein Schlauchkabel 37 mit einem am Achskörper 17 befestigten Zughebel 38 verbunden. Dabei stützt sich der Schlauch 39 auflaufseitig am Führungsrohr 2 und achsseitig an den Bremshebeln 10 ab, während das Kabel 40 auflaufseitig an der Feststellbremse 36 und achsseitig am Zughebel 38 angreift. Dabei kann sich das Kabel 8 des Schlauchkabels 6 der Betriebsbremse durch die Traverse 19 (Fig. 21) hindurchschieben.

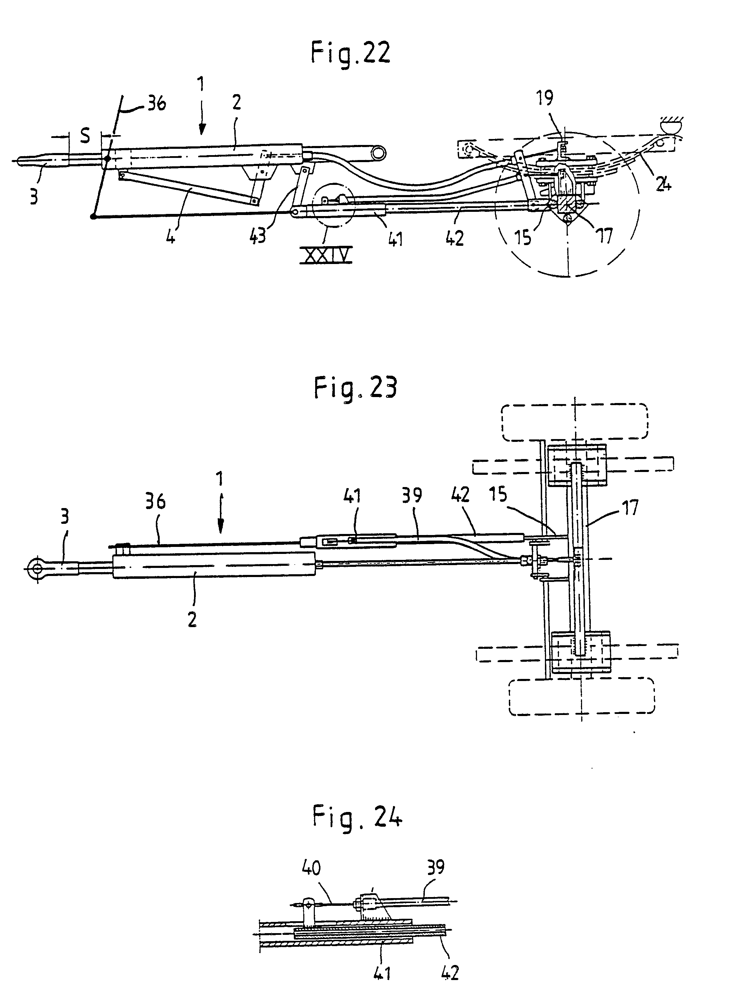

Bei einem Fahrgestell mit schwenkbarer Deichsel für mehrachsige Anhänger ist die Feststellbremse 36 gemäß den Fig. 22 bis 24 etwas anders ausgebildet. Die achsseitige Anordnung und Abstützung des Schlauchkabels 37 ändert sich nicht. Dagegen ist das auflaufseitige Ende des Schlauches 39 an einem teleskopierbaren Rohr 41 abgestützt, welches verschiebbar auf einer an einem Achshebel 15 abgestützten Stange 42 angeordnet ist, an welcher das Kabel 40 angreift. Das Rohr 41 ist über einen Lenker 43 mit dem Führungsrohr 2 verbunden. Mit dieser Feststellbremse ist gleichzeitig eine Höheneinstellung der Zugstange 3 möglich.

Bezugszeichenliste

  1 Auflaufvorrichtung
  2 Führungsrohr
  3 Zugstange
  4 Druckstange
  5 Übertragungskabel
  6 Schlauchkabel
  7 Schlauch
  8 Kabel
  9 Radbremse
10 Bremshebel
11 Bremswelle
12 Bremsnocken
13 Bremsbacke
14 Bremstrommel
15 Achshebel
16 Bremsschild
17 Achskörper
18 Zwischenglied
19 Traverse
20 Muttern
21 Rohrabschnitte
22 Gummifederelement
23 Federspanngehäuse

24 Blattfeder
25 Gleitlager
26 Segmente
27 Lagergehäuse
28 Schlitz
29 Anschlagstift
30 Rückstellfeder
31 Schwenklager
32 Stützhebel
33 Stützachse
34 Käfig
35 Öffnung
36 Feststellbremse
37 Schlauchkabel
38 Zughebel
39 Schlauch
40 Kabel
41 Rohr
42 Stange
V Vorwärtsfahrt
R Rückwärtsfahrt
S Auflaufweg

**Patentansprüche**

1. Fahrgestell für auflaufgebremste Fahrzeuganhänger mit wenigstens einem Achskörper (17) und Radbremsen, wobei die Bremskraft über eine mechanische Kraftübertragungseinrichtung (6) von der Auflaufeinrichtung (1) auf wenigstens einen drehfest mit einer Bremswelle (11) verbundenen Bremshebel (10) und von diesem auf Bremsbacken (13) einer Trommel- oder Scheibenbremse übertragen wird, wobei der Achskörper (17) derart in seiner Aufhängung (21 bis 24) angeordnet ist, daß er während einer Bremsung bei Vorwärtsfahrt durch einen Anschlag (49, 35, 28) an einer Drehung gehindert ist, wogegen er während einer Bremsung bei Rückwärtsfahrt entgegen einer Rückstellkraft aus seiner Ruhelage heraus begrenzt drehbar um seine eigene Achse gelagert ist, und mit einem mit dem Achskörper (17) drehfest verbundenen Achshebel (15), wobei die Bremswelle (11) an einem mit dem Achskörper (17) drehfest verbundenen Teil drehbar gelagert ist, dadurch gekennzeichnet, daß die Bremswelle (11) im freien Ende des Achshebels (15) gelagert ist und daß die mechanische Kraftübertragungseinrichtung als Schlauchkabel (6) ausgebildet ist, dessen Kabel (8) an einem fahrgestellfesten Konstruktionsteil (19) angreift während der Schlauch (7) am Bremshebel (10) abgestützt ist.

2. Fahrgestell nach Anspruch 1, dadurch gekennzeichnet, daß die Aufhängung aus Rohrabschnitten (21) mit größerem Querschnitt als der Achskörper (17) und eingesetzten Gummifederelementen (22) besteht.

3. Fahrgestell nach den Ansprüchen 1 und 2, dadurch gekennzeichnet, daß die Rohrabschnitte (21) mit Unterteilen von Federspanngehäusen (23) verbunden sind.

4. Fahrgestell nach den Ansprüchen 1 bis 3, dadurch gekennzeichnet, daß der maximale Drehwinkel des Achskörpers (17) durch einen doppelten Anschlagkeil (49) begrenzt ist.

5. Fahrgestell nach Anspruch 1, dadurch gekennzeichnet, daß die Aufhängung aus Gleitlagern (25) besteht und an den Achshebeln (15) wenigstens eine Rückstellfeder (30) angreift.

6. Fahrgestell nach den Ansprüchen 1 und 5, dadurch gekennzeichnet, daß die Gleitlager (25) aus den Achskörper (17) umgebenden Segmenten (26) und einem zweiteiligen Lagergehäuse (27) gebildet sind, welches mit den Unterteilen der Federspanngehäuse (23) verbunden sind.

7. Fahrgestell nach den Ansprüchen 1, 5 und 6, dadurch gekennzeichnet, daß der maximale Drehwinkel des Achskörpers (17) mit Anschlagstiften (29) begrenzt ist, die in Schlitze (28) der Lagergehäuse (27) eingreifen.

8. Fahrgestell nach Anspruch 1, dadurch gekennzeichnet, daß die Aufhängung aus unter dem Achskörper (17) befestigten Stützhebeln (32), einer diese miteinander verbindenden Stützachse (33) und einem Käfig (34) besteht, in dem die Stützachse (33) gelagert ist.

9. Fahrgestell nach den Ansprüchen 1 und 8, dadurch gekennzeichnet, daß die Mitte der Stützachse (33) gegenüber der Mitte des Achskörpers (17) nach vorne versetzt angeordnet ist.

10. Fahrgestell nach den Ansprüchen 1, 8 und 9, dadurch gekennzeichnet, daß die Käfige (34) mit den Unterteilen der Federspanngehäuse (23) verbunden sind.

11. Fahrgestell nach Anspruch 1, dadurch gekennzeichnet, daß die Aufhängung aus unter dem Achskörper (17) befestigten Stützhebel (32), einer diese miteinander verbindenden Drehstabfeder und einem Käfig (34) besteht, in dem die Drehstabfeder eingespannt ist.

12. Fahrgestell nach Anspruch 1 mit einer starren Deichsel und mit einer Feststellbremse, deren Bremskraft mit einem Schlauchkabel übertragen wird, dadurch gekennzeichnet, daß das Kabel (40) der Feststellbremse an einem mit dem Achskörper (17) verbundenen Zughebel (38) angreift und der Schlauch (39) am Bremshebel (10) abgestützt ist.

13. Fahrgestell nach Anspruch 1 mit einer schwenkbaren Deichsel und einer Fallbremse, deren Bremskraft mit einem Schlauchkabel übertragen wird, dadurch gekennzeichnet, daß zwischen der Feststellbremse (36) und dem Schlauchkabel (37) ein teleskopierbares Rohr (41) angeordnet ist, dessen Innenrohr (Stange 42) am Achshebel (15) abgestützt und mit dem Kabel (40) verbunden ist während das Rohr (41) mit der Feststellbremse (36) verbunden und am Schlauch (39) abgestützt ist.

**Claims**

1. A running frame for overrun-braked vehicle trailers, the running frame having at least one axle member (17) and wheel brakes, the braking force being transmitted by a mechanical transmission facility (6) from the overrun device (1) to at least one brake lever (10) so connected to a brake shaft (11) as to corotate therewith and by the brake lever (10) to brake shoes (13) of a drum brake or disc brake, the axle member (17) being so disposed in its suspension (21-24) as to be prevented from rotating by an abutment (49, 35, 28) during a brake application in forwards travel, whereas during a brake application in reverse travel the axle member (17) is so mounted as to be limitedly rotatable from its normal position around its axis against a restoring force, the running frame also comprising an axle lever (15) rigidly connected to the axle member (17), the brake shaft (11) being rotatably mounted on a part so connected to the axle member (17) as to corotate therewith, characterised in that the brake shaft (11) is mounted in the free end of the axle lever (15) and the mechanical transmission facility is in the form of a cable-in-hose device (6) whose cable (8) engages a structural member (19) rigidly secured to the running frame while the hose (7) bears on the brake lever (10).

2. A running frame according to claim 1, characterised in that the suspension comprises tubular parts (21) of larger cross-section than the axle member (17) and inserted rubber spring elements (22).

3. A running frame according to claims 1 and 2, characterised in that the tubular parts (21) are connected to underparts of spring-stressing casings (23).

4. A running frame according to claims 1-3, characterised in that the maximum angle of rotation of the axle member (17) is limited by a double stop wedge (49).

5. A running frame according to claim 1, characterised in that the suspension comprises plain bearings (25) and at least one return spring (30) acts on the axle levers (15).

6. A running frame according to claims 1 and 5, characterised in that the plain bearings (25) comprise segments (26) around the axle member (17) and a two-piece bearing casing (27) which are connected to the underparts of the spring-stressing casings (23).

7. A running frame according to claims 1, 5 and 6, characterised in that the maximum angle of rotation of the axle member (17) is limited by stop pins (29) which engage in slots (28) in the bearing casings (27).

8. A running frame according to claim 1, characterised in that the suspension comprises : bearing levers (32) secured below the axle member (17) ; a bearing shaft (33) interconnecting the bearing levers (32) ; and a cage (34) in which the bearing shaft (33) is mounted.

9. A running frame according to claims 1 and 8, characterised in that the centre of the bearing shaft (33) is offset forwardly from the centre of the axle member (17).

10. A running frame according to claims 1, 8 and 9, characterised in that the cages (34) are connected to the underparts of the spring-stressing casings (23).

11. A running frame according to claim 1, characterised in that the suspension comprises : supporting levers (32) secured below the axle member (17) ; a torsion bar spring interconnecting the supporting levers (32) ; and a cage (34) in which the torsion bar spring is clamped.

12. A running frame according to claim 1 comprising a rigid draw bar and a parking brake whose braking force is transmitted through a cable-in-hose device, characterised in that the cable (40) of the parking brake acts on a pull lever (38) connected to the axle member (17) and the hose (39) bears on the brake lever (10).

13. A running frame according to claim 1 having a pivoted draw bar and an emergency brake whose braking force is transmitted through a cable-in-hose device, characterised in that a telescopic tube (41) is disposed between the parking brake (36) and the cable-in-hose device (37) and the inner tube (rod 42) of the tube (41) bears on the axle lever (15) and is connected to the cable (40) while the tube (41) is connected to the parking brake (36) and bears on the hose (39).

**Revendications**

1. Châssis pour remorques de véhicules pourvus d'un frein à glissement, comportant au moins un corps d'essieu (17) et des freins de roues sur lequel la force de freinage est transmise, par l'intermédiaire d'un dispositif mécanique de transmission, du dispositif d'application (1) à au moins un levier de frein (10) solidaire d'un arbre d'actionnement de frein (11) et, de celui-ci, à des mâchoires de frein (13) d'un frein à tambour ou à disque, sur lequel la suspension (21 à 24) du corps d'essieu est disposée de telle sorte qu'une butée (49, 33, 28) lui interdit toute rotation, pendant un freinage en marche avant, alors que pendant un freinage en marche arrière, il dispose d'une possibilité de rotation limitée autour de son axe à partir de sa position de repos, sous l'effet d'une force de rappel, et comportent en outre un levier d'essieu (15) relié sans possibilité de rotation au corps d'essieu (17), l'arbre de frein (11) étant monté mobile en rotation sur une partie reliée sans possibilité de rotation au corps d'essieu (17), caractérisé en ce que l'arbre d'actionnement de frein (11) est monté sur l'extrémité libre du levier d'essieu (15) et en ce que le dispositif mécanique de transmission de force est réalisé sous forme d'un câble sous un tuyau flexible (6) dont le câble (8) est en prise avec un élément de construction (19) fixé sur le châssis, tandis que le tuyau flexible (7) s'appuie sur le levier de frein (10).

2. Châssis selon la revendication 1, caractérisé en ce que la suspension est constituée par des tronçons de tube (21) dont la section est supérieure à celle du corps d'essieu (17) et par des éléments de ressorts en caoutchouc (22) enfoncés par pression.

3. Châssis selon les revendications 1 et 2, caractérisé en ce que les tronçons du tube (21) sont reliés aux parties inférieures de blocs de tension de ressort (23).

4. Châssis selon les revendications 1 à 3, caractérisé en ce que l'angle maximum de rotation du corps d'essieu (17) est limité par un double coin de butée (49).

5. Châssis selon la revendication 1, caractérisé en ce que la suspension est constituée par des paliers à glissement (25) et en ce que un ressort de rappel (30) au moins agit sur les leviers d'essieu.

6. Châssis selon les revendications 1 à 5, caractérisé en ce que les paliers à glissement (25) sont constitués par des segments (26) entourant le corps d'essieu (17) et par un carter de palier (27) en deux parties, qui est relié aux parties inférieures des blocs de tension de ressort (23).

7. Châssis selon les revendications 1, 5 et 6, caractérisé en ce que l'angle de rotation maximum du corps d'essieu (17) est limité par des chevilles de butée (29), qui s'engagent dans des fentes (28) du carter de palier (27).

8. Châssis selon la revendication 1, caractérisé en ce que la suspension est constituée par des leviers d'appui (32) fixés en-dessous du corps d'essieu (17) par un axe d'appui (33) qui les relie entre eux et par une cage (34) dans laquelle est monté l'axe d'appui.

9. Châssis selon les revendications 1 et 8, caractérisé en ce que le milieu de l'axe d'appui (33) est disposé décalé vers l'avant par rapport au milieu du corps d'essieu (17).

10. Châssis selon une des revendications 1, 8 et 9 caractérisé en ce que les cages (34) sont reliées aux parties inférieures des blocs de tension de ressort (23).

11. Châssis selon la revendication 1 caractérisé en ce que la suspension est constituée par un levier d'appui (32) fixé sous le corps d'essieu (17), par une barre de tension qui les relie entre eux et par une cage (34) dans laquelle est encastrée la barre de torsion.

12. Châssis selon la revendication 1 comportant un timon rigide et un frein d'immobilisation dont la force de freinage est transmise par un câble sous tuyau flexible, caractérisé en ce que le câble (40) du frein d'immobilisation est en prise avec un levier de traction (38) relié au corps d'essieu (17) et en ce que le tuyau flexible (39) s'appuie sur le levier de frein (10).

13. Châssis selon la revendication 1 comportant un timon articulé et un frein à contrepoids dont la force de freinage est transmise par un câble sous tuyau flexible, caractérisé en ce qu'il est disposé entre le frein d'immobilisation (36) et le câble sous tuyau souple (37) un tube téléscopable (41) dont le tube intérieur (tige 42) s'appuie sur le levier d'essieu (15) et est relié au câble (40), tandis que le tube (41) est relié au frein d'immobilisation (36) et s'appuie sur le tuyau (39).

Fig. 1

Fig. 2

Fig. 4

Fig. 3

0 208 151

Fig.5

Fig.6

Fig.8

Fig.7

2

## Fig. 9

X
19
8
7
10
24
23
49
11
22
21
V
15 17 22
Fahrtrichtung
V

## Fig. 10

Y
19
7
8
10
24
23
49
11
22
15
17 21
R
22
Fahrtrichtung
R

## Fig. 11

19
20
10
11
15
25
17
23
26
V

## Fig. 12

19
24
23
17
27

## Fig. 13

19
10
11
15
23
30
27
R
28  29
26
25
17

## Fig. 14

19
24
23
17
27

4

Fig.15

Fig.16

Fig.17

Fig.18

Fig. 19

Fig. 20

Fig. 21

0 208 151

Fahrtrichtung

## Fig.22

## Fig.23

## Fig.24